# EUROPÄISCHE PATENTSCHRIFT

(11) **EP 2 149 971 B1**
(45) Veröffentlichungstag und Bekanntmachung des Hinweises auf die Patenterteilung: **20.05.2015**
(21) Anmeldenummer: 08013625.2
(22) Anmeldetag: 29.07.2008
(51) Int. Cl.: H02K 41/00, H02K 1/12

(54) **Drehlinearantriebsvorrichtung mit läuferstabilisierendem, weichmagnetischem Element**
Rotating linear drive device with soft magnetic element for stabilising the rotor
Dispositif d'entraînement linéaire rotatif doté d'un élément stabilisant le rotor légèrement magnétique

(43) Veröffentlichungstag der Anmeldung: 03.02.2010
(73) Patentinhaber: Siemens Aktiengesellschaft, 80333 München (DE)
(72) Erfinder: Budde, Thomas, Dr., 97072 Würzburg (DE); Vollmer, Rolf, 36129 Gersfeld (DE)

(56) Entgegenhaltungen:
- WO-A-2006/117335
- JP-A- 4 281 359
- JP-A- 9 074 733
- JP-A- 2002 051 531

## Beschreibung

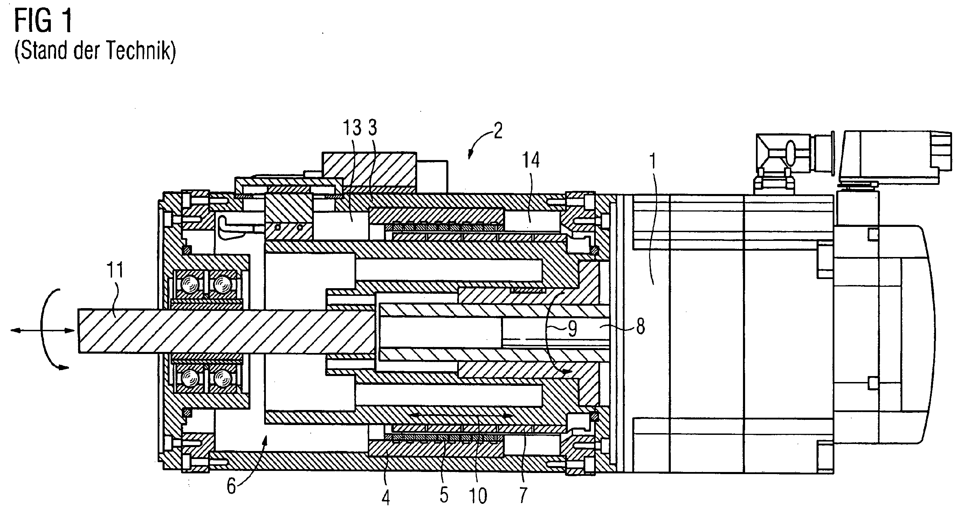

Die vorliegende Erfindung betrifft eine Linearantriebsvorrichtung mit einem Läufer und einem Stator, der ein Statorjoch aufweist. Insbesondere betrifft die vorliegende Erfindung einen Drehlinearantrieb mit einer derartigen Linearantriebsvorrichtung. Als Antrieb, insbesondere für Hub-Schwenk-Antriebe im Handlingsbereich oder Anwendungen mit ähnlichem Bewegungsprofil, kommen Dreh-Linear-Antriebe wie etwa ein modular aufgebauter Dreh-Linear-Antrieb zum Einsatz. Ein derartiger modular aufgebauter Dreh-Linear-Antrieb ist in FIG 1 dargestellt. Er besteht hier aus einem rotatorischen Standard-Servo-(Getriebe)-Motor 1 und einem daran angebauten Linearanbaumodul 2. Dieses Linearanbaumodul 2, d.h. eine Linearantriebsvorrichtung, ist hier im Längsschnitt dargestellt. Innerhalb des zylindrischen Gehäuses 3 ist ein Statorjoch 4 einschließlich Spulen 5 eines hohlzylindrischen Stators angeordnet. Der Stator wirkt mit einem Läufer 6 zusammen, der an seiner Zylinderoberfläche Permanentmagnete 7 trägt. Die Abtriebswelle 8 des rotatorischen Servomotors 1 treibt den Läufer 6 gemäß dem eingezeichneten Pfeil 9 rotatorisch an. Innerhalb des Linearanbaumoduls 2 wird der Läufer 6 darüber hinaus entsprechend dem Pfeil 10 linear angetrieben. Somit vollführt die Antriebswelle 11 des Läufers 6 eine Dreh-Linear-Bewegung.

Beim Einsatz eines solchen Dreh-Linear-Antriebs in vertikaler Anordnung ist es erforderlich eine Gewichtskraftkompensation für den Läufer zwecks des Linearanbaumoduls 2 zu realisieren. Nur so lässt sich ein Absenken der Abtriebswelle 11 aus dem Gehäuse 3 beziehungsweise in das Gehäuse 3 hinein im stromlosen Zustand des Antriebs vermeiden.

Bislang ist bekannt, zur Gewichtskraftkompensation eine mechanische Spiralfeder in modularen Dreh-Linear-Antrieben einzusetzen. Diese Spiralfeder wird beispielsweise zwischen den Servomotor und das Linearanbaumodul eingebracht und drückt den Läufer nach außen.

Nachteilig an dieser Anordnung ist jedoch, dass die Federkraft der Spiralfeder linear mit dem Weg zunimmt. Es wäre jedoch wünschenswert, wenn der Läufer in allen linearen Lagen im unbestromten Zustand zumindest nahezu axialkraftfrei be-, trieben werden könnte.

Aus der Druckschrift JP 2002 051531 A ist ein bewegbarer magnetischer Aktuator bekannt. Der Aktuator besitzt ein zylindrisches Sekundärteil und ein hohlzylindrisches Primärteil. Das Primärteil besitzt über seinen Magnetspulen ein Joch, das deutlich über die Spulen in axialer Richtung hinausragt. Damit sollen magnetische Randeffekte reduziert werden.

Die Druckschrift JP 04281359 A beschreibt eine lineare Synchronmaschine. Zur Reduktion der Kraftwelligkeit sind an den Stirnseiten eines Aktivteils Eisenstücke mit L-förmigem Querschnitt angebracht.

Ferner beschreibt die Druckschrift JP 09074733 A einen Linearmotor, bei dem die Kraftwelligkeit reduziert werden soll. Hierzu werden an den Stirnseiten eines Aktivteils abgerundete, weichmagnetische Elemente angebracht.

Schließlich zeigt die Druckschrift WO 2006/117335 A1 einen 3-Phasen-Linearantrieb mit reduzierter Kraftwelligkeit. Zur Reduzierung der Kraftwelligkeit sind weichmagnetische Endscheiben an die Stirnseiten des zylinderförmigen Primärteils angebracht. Die Kontur der Endscheiben ist so gewählt, dass der Luftspalt zwischen Primärteil und Sekundärteil nicht abrupt größer wird.

Die Aufgabe der vorliegenden Erfindung besteht darin, eine Linearantriebsvorrichtung bereitzustellen, bei der die Gewichtskraft des Läufers (gegebenenfalls einschließlich der daran montierten Komponenten) verlustfrei, zumindest teilweise mit möglichst konstanter Axialkraft kompensiert werden kann.

Erfindungsgemäß wird diese Aufgabe gelöst durch eine Linearantriebsvorrichtung nach Anspruch 1.

In vorteilhafter Weise ist es so möglich, mit Hilfe des Läufers und des weichmagnetischen Elements eine magnetische Feder zu realisieren, die unabhängig von der Auslegung eine konstante Federkraft liefern kann.

Der Läufer ist zylindrisch und von dem weichmagnetischen Element, das hohlzylindrisch ist, umgeben. Dadurch wirkt das weichmagnetische Element unabhängig von einer Drehstellung des Läufers mit einer gewissen axialen Kraft auf den Läufer. Des Weiteren können der Läufer und der Stator rotationssymmetrisch sein, und das weichmagnetische Element kann axial versetzt zu dem Stator angeordnet sein. Ein derartiges weichmagnetisches Element lässt sich leicht optional in dem Antrieb an der gewünschten Seite einbauen.

Das weichmagnetische Element kann dann auch mit dem Stator zu einer festen Einheit oder mit dem Statorjoch einteilig verbunden sein. Dadurch lässt sich gegebenenfalls Montageaufwand einsparen.

Eine Stirnseite des weichmagnetischen Elements verläuft in einer Ebene schräg zur Achse des weichmagnetischen Elements. Die Stirnseite erstreckt sich damit nicht senkrecht zur Achse des Antriebs beziehungsweise des weichmagnetischen Elements, sondern schräg hierzu. Durch diese Schrägung lässt sich eine sehr konstante Kraft-Weg-Kennlinie der magnetischen Feder erreichen.

Die Schrägung der Stirnseite des weichmagnetischen Elements erstreckt sich in axialer Richtung genau über eine Polteilung. Durch eine derartige Schrägung lässt sich entlang eines verhältnismäßig großen linearen Verfahrwegs des Antriebs eine nahezu vollkommen konstante Kraft-Weg-Kennlinie der magnetischen Feder realisieren.

Das weichmagnetische Element ist zur (vollständigen) Kompensation der Gewichtskraft des Läufers und gegebenenfalls der daran angebauten Komponenten ausgelegt. Hierdurch lässt sich der Läufer im unbestromten Fall axialkraftfrei betreiben.

Die oben beschriebene, erfindungsgemäße Linearantriebsvorrichtung kann Teil eines Dreh-Linear-Antriebs sein, der über eine entsprechende rotatorische Antriebsvorrichtung verfügt. Damit kann der erfindungsgemäße Vorteil der magnetischen Feder speziell für den Dreh-Linear-Antrieb genutzt werden.

Die vorliegende Erfindung wird nun anhand der beigefügten Zeichnungen näher erläutert, in denen zeigen:
- FIG 1: einen Drehlinearantrieb gemäß dem Stand der Technik;
- FIG 2: eine Prinzipsskizze zum Verschieben eines Läufers gegenüber einem weichmagnetischen Element zusammen mit einer Kraft-Weg-Kennlinie;
- FIG 3: einen Läufer mit geschrägtem, weichmagnetischem Element;
- FIG 4: einen Läufer mit einem weichmagnetischen Element, dessen Stirnkontur abgerundet ist;
- FIG 5: ein Kraft-Weg-Diagramm der Anordnung von FIG 4;
- FIG 6: ein weichmagnetisches Element, das in den Stator eines Linearantriebs integriert ist und
- FIG 7: Kraft-Weg-Diagramme einer mechanischen Feder und einer magnetischen Konstantkraftfeder.

Die nachfolgenden näher geschilderten Ausführungsbeispiele stellen bevorzugte Ausführungsformen der vorliegenden Erfindung dar.

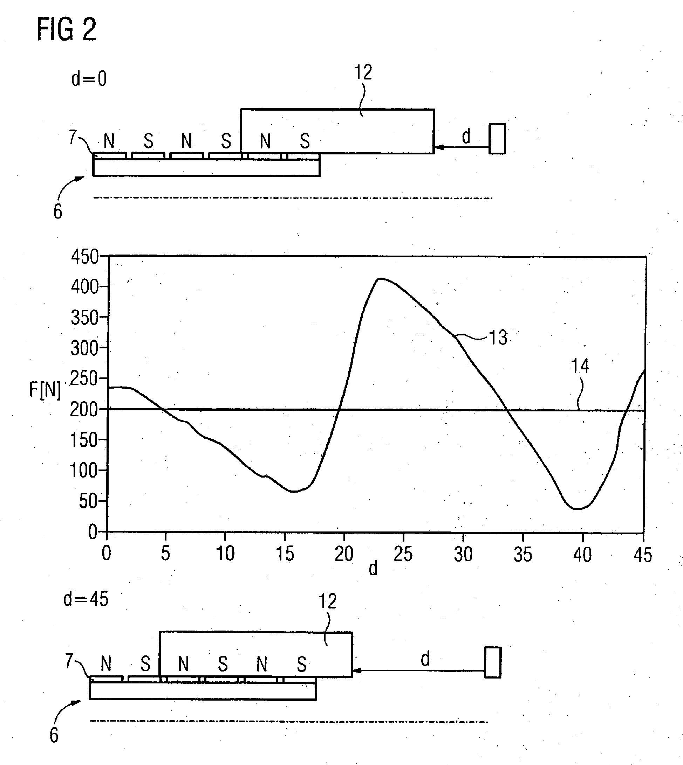

Die vorliegende Erfindung basiert auf dem Gedanken, die Gewichtskraftkompensation für den Läufer einer Linearantriebsvorrichtung beziehungsweise eines Dreh-Linear-Antriebs durch den Einsatz einer magnetischen Konstantkraftfeder zu erreichen. Beispielsweise soll eine derartige Konstantkraftfeder in das Linearanbaumodul 2 des Antriebs von FIG 1 eingebaut werden. Sie wird gemäß dem Ausführungsbeispiel von FIG 2 durch die Permanentmagnete 7 des Läufers 6 einerseits und durch ein passives weichmagnetisches Element 12 andererseits realisiert. Dieses weichmagnetische Element 12 befindet sich beispielsweise in dem Gehäuse 3 des Linearanbaumoduls (vergleiche FIG 1).

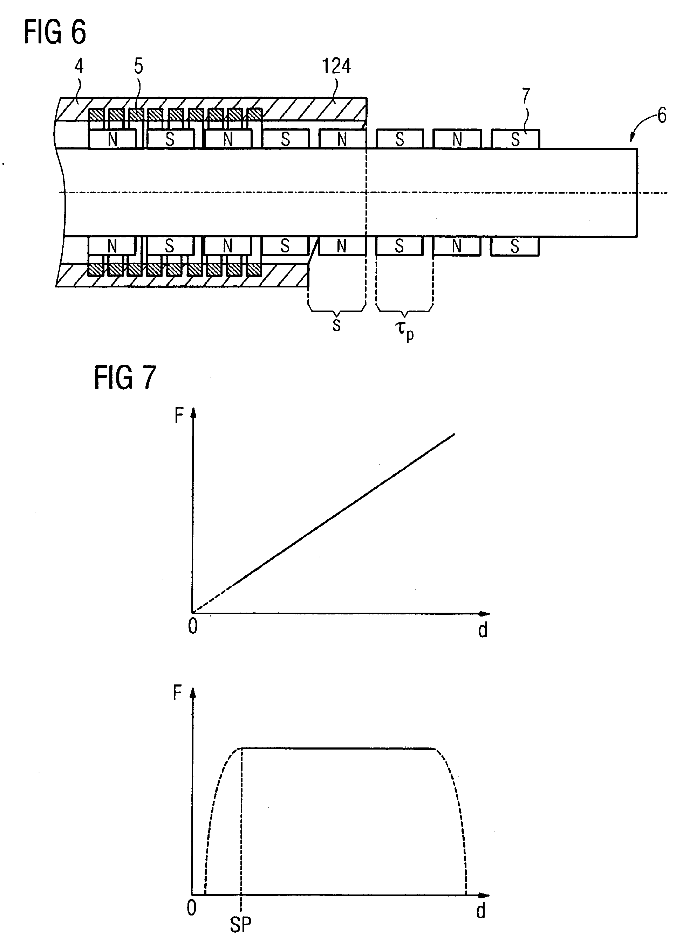

Gemäß einer ersten Variante ist das weichmagnetische Element 12 einseitig axial versetzt zum Stator 4, 5 angeordnet und befindet sich beispielsweise in dem freien Raum 13 oder 14 axial hinter beziehungsweise vor dem Stator 4, 5. Gemäß einer zweiten Variante, die im Zusammenhang mit FIG 6 noch näher erläutert werden wird, kann das weichmagnetische Element 12 auch fest beziehungsweise einteilig mit dem Stator 4, 5 verbunden sein.

Durch das hohlzylinderförmige weichmagnetische Element, in dem der zylinderförmige Läufer 6 bewegt wird, entstehen abhängig von der axialen Stellung des Läufers 6 und somit der Pole eine axial wirkende Kraft auf den Läufer. Der Kraftverlauf ist in der Mitte von FIG 2 in einem Diagramm über einer Wegkoordinate d dargestellt. Ausgangspunkt ist beispielsweise die relative Lage des Läufers 6 zu dem weichmagnetischen Element 12, wie er oben in FIG 2 dargestellt ist. Hier gilt für die Wegkoordinate d=0.

Der Läufer 6 soll in dem hier gewählten Beispiel um 2 Polteilungen in das weichmagnetische Element 12 geschoben werden, so dass eine relative Stellung der beiden Komponenten erreicht wird, wie sie in FIG 2 unten dargestellt ist. Dort gilt für die Wegkoordinate d=45. Die Kurve 13 zeigt die Axialkraft, die von dem weichmagnetischen Element 12 auf den Läufer 6 ausgeübt wird. Es ist zu erkennen, dass die Axialkraft abhängig von der Wegkoordinate, d. h. der relativen Position zwischen Läufer und weichmagnetischem Element, stark variiert. Nur in sehr kleinen Bereichen (z. B. 0<d<3) kann der Kraftverlauf als annähernd linear betrachtet werden.

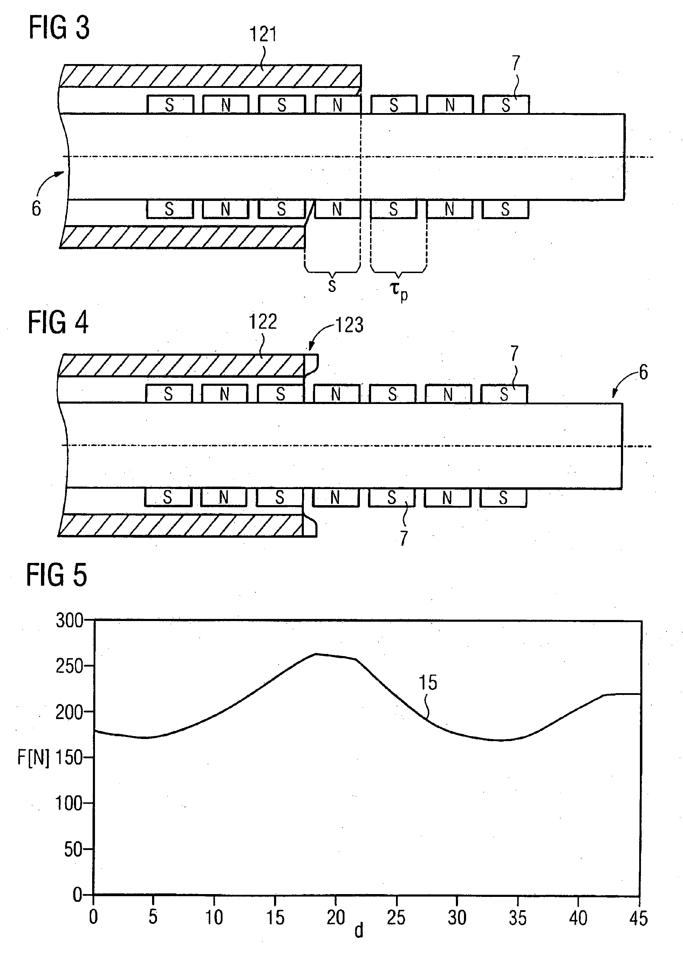

Ziel ist es jedoch, die Axialkraft auf den Läufer zur Kompensation seiner Gewichtskraft unabhängig von seiner Linearposition zu gestalten. Hierzu wird vorgeschlagen, dass das hohlzylindrische beziehungsweise rohrförmige, weichmagnetische Element 121 an seiner Stirnseite gemäß FIG 3 geschrägt ist. FIG 3 zeigt eine Prinzipskizze eines Läufers 6, auf dem axial wechselnd magnetische Pole durch Permanentmagnete 7 realisiert sind. Die Permanentmagnete 7 befinden sich in einem Abstand τₚ, der der Polteilung entspricht. Die Schrägung S des weichmagnetischen Elements 121 erstreckt sich in axialer Richtung über exakt eine Polteilung. Mit dieser Geometrie der Schrägung lässt sich eine nahezu absolut konstante Axialkraft erreichen, wie sie in FIG 2 mit der Gerade 14 angedeutet ist. Durch die Schrägung, die über 180° elektrisch verläuft, wird ein Kraftmittelwert der Kurve 13, nämlich die konstante Kraft 14 über dem Verfahrweg (hier zwei Polteilungen) erreicht.

In FIG 4 ist ein nicht beanspruchtes Beispiel dargestellt. Sie zeigt neben dem Läufer 6 mit dem Permanentmagneten 7 (identisch zu dem Läufer 6 mit den Permanentmagneten 7 von FIG 3) ein weichmagnetisches, rohrförmiges Element 122, dessen eine Stirnseite eine abgerundete Kontur 123 aufweist. Die Rundung kann beispielsweise mit einem Radius ausgeführt sein, der in der Größenordnung der radialen Dicke des weichmagnetischen Elements 122 liegt. Eine derartige Rundung der Stirnkontur reduziert die Kraftwelligkeit, so dass sich beispielsweise eine Axialkraft entsprechend der Kurve 15 von FIG 5 über dem Weg d ergibt. Es ist zu erkennen, dass die Maxima gegenüber der Kurve 13 deutlich reduziert sind, und somit grob genähert eine konstante Axialkraft erreicht wird. Durch die Rundung der Stirnkontur lässt sich somit auch eine verhältnismäßig gute Gewichtskraftkompensation für den Läufer erzielen. Die Kontur der "Rundung" kann auch von der Teilkreisform abweichen.

Ein weiteres Ausführungsbeispiel ist in FIG 6 schematisch angedeutet. Radial über dem Läufer 6 mit seinem Permanentmagneten 7 befindet sich der Stator mit seinem Joch 4 und den Spu-len 5. Das weichmagnetische Element 124 zur Gewichtskraftkompensation ist hier in den Stator 4, 5 integriert. Dies bedeutet, dass das weichmagnetische Element 124 mit dem Statorjoch 4 fest beziehungsweise einteilig verbunden ist. Das weichmagnetische Element 124 ist hier wie in dem Beispiel von FIG 3 mit einer Schrägung S versehen, so dass eine konstante Axialkraft im unbestromten Zustand der Spulen 5 erreicht werden kann. Der Stator 4, 5 ist in dem vorliegenden Beispiel durch das weichmagnetische Element 124 axial fortgesetzt. Der Querschnitt des weichmagnetischen Elements 124 quer zur Achse des Läufers 6 entspricht vor der Schrägung in etwa dem des Stators 4, 5. Wie auch bei den Beispielen der FIG 3 und 4 wird der Läufer 6 nach links in das jeweilige weichmagnetische Element 121, 122 oder 124 gezogen.

Durch die Dimensionierung des Luftspalts zwischen dem weichmagnetischen Element 12, 121, 122, 124 zur Konstantkrafterzeugung und dem Läufer 6 des Linearanbaumoduls beziehungsweise der Stirnfläche des weichmagnetischen Elements kann der absolute Wert der Konstantkraft variiert werden. Somit kann beispielsweise ausschließlich die Gewichtskraft des Läufers oder aber die Gewichtskraft des Läufers einschließlich etwaiger Anbauelemente kompensiert werden, und folglich eine entsprechende Anpassung an die Anwendung erreicht werden.

Die Kraft-Weg-Kennlinie einer magnetischen Konstantkraftfeder ist in FIG 7 im Vergleich zu einer Kraft-Weg-Kennlinie einer mechanischen Spiralfeder dargestellt. Während die mechanische Spiralfeder, deren Kennlinie im linken Teil von FIG 7 dargestellt ist, einen typischen linearen Anstieg entsprechend der Federkonstante aufweist, zeigt die magnetische Feder, deren Kennlinie in FIG 7 rechts dargestellt ist, einen konstanten Verlauf im Arbeitsbereich. Dieser Konstantbereich wird erreicht, wenn der erste Pol des Läufers komplett axial im weichmagnetischen Element eingetaucht ist, was in dem Diagramm mit der Stelle SP gekennzeichnet ist.

Durch den Einsatz magnetischer Konstantkraftfedern wird neben der Eigenschaft, dass der Linearläufer im stromlosen Zustand in eine definierte Lage verfährt, auch ein Vorteil bezüglich der thermischen Ausnutzung des Motors erzielt. Da der Ausgleich der Gewichtskraft des Linearläufers und der applikationsspezifisch angebauten Massen nicht elektromagnetisch durch den Linearmotor erfolgen muss, sondern passiv und somit verlustfrei durch ein Federelement kompensiert wird, kann hierdurch bei gleicher Leistungsfähigkeit ein kleineres Aktivteil in der jeweilige Applikation eingesetzt werden. Darüber hinaus bietet der Einsatz der magnetischen Konstantkraftfeder noch den Vorteil, dass sich die aufgebrachte Axialkraft auf das Gehäuse des Linearanbaumoduls abstützt, während beim Einsatz eines mechanischen Federelements die Axialkraft auf die Motorwelle des Standard-Servo-Motors übertragen wird und somit die Lagerlebensdauer des rotatorischen Motors beeinflusst wird. Insgesamt kann somit ein weichmagnetisches Element in der oben dargestellten axialen Anordnung und dem dargestellten Design im Gehäuse eines Linearanbaumoduls bereitgestellt werden, das die Permanentmagnete im Läufer zur Erzeugung einer konstanten magnetischen Kraft verwendet, und somit die Kompensation der Gewichtskraft des Läufers sowie applikationsspezifisch angebauter Massen erlaubt.

## Patentansprüche

1. Linearantriebsvorrichtung mit
- einem Läufer (6) mit Permanentmagneten (7), wobei sich die Permanentmagnete (7) in einem Abstand (τₚ) zueinander befinden, der einer Polteilung entspricht,
- einem Stator (4,5), der ein Statorjoch (4) und Spulen (5) aufweist, und
- einem weichmagnetischen Element (12, 121, 122, 124), das zusätzlich zu dem Statorjoch (4) zur Wechselwirkung mit dem Läufer (6) ausgebildet ist, um auf den Läufer (6) eine zeitunabhängige axiale Kraft auszuüben, wobei
- der Läufer (6) zylindrisch ist und von dem weichmagnetischen Element (12,121,122,124), das hohlzylindrisch ist, umgeben ist,
**dadurch gekennzeichnet, dass**
- eine Stirnseite des weichmagnetischen Elements (12, 121, 122, 124) in einer Ebene schräg zur Achse des weichmagnetischen Elements (12,121,122,124) verläuft, und
- die Schrägung der Stirnseite des weichmagnetischen Elements (12, 121, 122, 124) sich in axialer Richtung über genau eine Polteilung (τₚ) erstreckt.

2. Linearantriebsvorrichtung nach Anspruch 1, wobei der Läufer (6) und der Stator (4,5) rotationssymmetrisch sind, und das weichmagnetische Element (12, 121,122,124) axial versetzt zu dem Stator (4,5) angeordnet ist.

3. Linearantriebsvorrichtung nach einem der vorhergehenden Ansprüche, wobei das weichmagnetische Element (12,121,122, 124) mit dem Stator (4,5) zu einer festen Einheit oder mit dem Statorjoch (4) einteilig verbunden ist.

4. Drehlinearantrieb mit einer rotatorischen Antriebsvorrichtung (1) und einer Linearantriebsvorrichtung (2) nach einem der vorhergehenden Ansprüche.

## Claims

1. Linear drive device with
- a rotor (6) having permanent magnets (7), wherein the permanent magnets (7) are located at a distance (τₚ) from one another corresponding to a pole pitch,
- a stator (4,5) which has a stator yoke (4) and coils (5), and
- a magnetically soft element (12,121,122,124) embodied additionally to the stator yoke (4) for interaction with the rotor (6) in order to exert a time-independent axial force upon the rotor (6), wherein
- the rotor (6) is cylindrical and is surrounded by the magnetically soft element (12,121,122,124), which is embodied as a hollow cylinder,
**characterised in that**
- an end face of the magnetically soft element (12,121,122,124) runs in a plane at an angle to the axis of the magnetically soft element (12,121,122,124), and
- the angle of the end face of the magnetically soft element extends in an axial direction over precisely one pole pitch (τₚ).

2. Linear drive device according to claim 1, wherein the rotor (6) and the stator (4,5) have rotational symmetry and the magnetically soft element (12,121,122,124) is arranged so as to be axially offset with regard to the stator (4,5).

3. Linear drive device according to one of the preceding claims, wherein the magnetically soft element (12,121,122,124) is connected with the stator (4,5) to a fixed unit or with the stator yoke (4) in one piece.

4. Rotating linear drive having a rotary drive device (1) and a linear drive device (2) according to one of the preceding claims.

## Revendications

1. Dispositif d'entraînement linéaire, comprenant
- un rotor ( 6 ) ayant des aimants ( 7 ) permanents, les aimants ( 7 ) permanents se trouvant à une distance ( τₚ ) les uns des autres, qui correspond à un pas polaire,
- un stator ( 4, 5 ), qui a une culasse ( 4 ) de stator et une bobine ( 5 ) et
- un élément ( 12, 121, 122, 124 ) à magnétisme doux, qui est constitué supplémentairement à la culasse ( 4 ) du stator pour interagir avec le rotor ( 6 ), afin d'appliquer une force axiale indépendante du temps au rotor ( 6 ), dans lequel
- le rotor ( 6 ) est cylindrique et est entouré de l'élément ( 12, 121, 122, 124 ) à magnétisme doux, qui est en forme de cylindre creux,
**caractérisé en ce que**
- un côté frontal de l'élément ( 12, 121, 122, 124 ) à magnétisme doux s'étend dans un plan en étant incliné par rapport à l'axe de l'élément ( 12, 121, 122, 124 ) à magnétisme doux et
- l'inclinaison du côté frontal de l'élément ( 12, 121, 122, 124 ) à magnétisme doux s'étend dans la direction axiale sur exactement un pas ( τₚ ) polaire.

2. Dispositif d'entraînement linéaire suivant la revendication 1, dans lequel le rotor ( 6 ) et le stator ( 4, 5 ) sont de révolution et l'élément ( 12, 121, 122, 124 ) à magnétisme doux est disposé de manière décalée axialement par rapport au stator ( 4, 5 ).

3. Dispositif d'entraînement linéaire suivant l'une des revendications précédentes, dans lequel l'élément ( 12, 121, 122, 124 ) à magnétisme doux est relié d'une seule pièce avec le stator ( 4, 5 ) en une unité fixe ou avec la culasse ( 4 ) du stator.

4. Entraînement linéaire rotatif ayant un dispositif ( 1 ) d'entraînement en rotation et un dispositif ( 2 ) d'entraînement linéaire suivant l'une des revendications précédentes.
